(19) Europäisches Patentamt
European Patent Office
Office européen des brevets

(11) EP 3 868 803 A1

(12) **EUROPÄISCHE PATENTANMELDUNG**

(43) Veröffentlichungstag:
**25.08.2021 Patentblatt 2021/34**

(51) Int Cl.:
***C08G 18/02*** *(2006.01)* ***C08G 18/16*** *(2006.01)*
***C08G 18/75*** *(2006.01)* ***C08G 18/79*** *(2006.01)*

(21) Anmeldenummer: **20157825.9**

(22) Anmeldetag: **18.02.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR CARBODIIMIDISIERUNG**

(57) Die vorliegende Erfindung betrifft Polycarbodiimide und ein Verfahren zu deren Herstellung unter Verwendung spezieller Katalysatoren.

EP 3 868 803 A1

## Beschreibung

Die vorliegende Erfindung betrifft Polycarbodiimide und ein Verfahren zu deren Herstellung.

Allgemein betrachtet sind Carbodiimidgruppen in einfacher Weise aus zwei Isocyanatgruppen unter Abspaltung von Kohlendioxid erhältlich:

$$R\text{-}N{=}C{=}O + O{=}C{=}N\text{-}R \rightarrow R\text{-}N{=}C{=}N\text{-}R + CO_2$$

Ausgehend von Diisocyanaten sind so oligomere Verbindungen mit mehreren Carbodiimidgruppen und gegebenenfalls Isocyanatgruppen, insbesondere endständigen Isocyanatgruppen, erhältlich, sogenannte Polycarbodiimide.

Die Herstellung der Polycarbodiimide aus Diisocyanaten ist an sich bekannt und wird beispielsweise in US-A 2 840 589, US-A 2 853 473, US-A 2 941 966 und EP-A 628541 beschrieben. Als Katalysatoren für die Carbodiimidisierung (Carbodiimidisierungskatalysatoren) von Isocyanaten haben sich Verbindungen des Phosphors bewährt, wie verschiedene Phospholenoxide, zum Beispiel 1-Methyl-2 (und/oder 3)-phospholen-1-oxid, 3-Methyl-2 (und/oder 3)-phospholen-1-oxid, 1-Phenyl-2(und/oder 3)-phospholen-1-oxid, 1-Phenyl-3-methyl-2 (und/oder 3)-phospholen-1-oxid und 1-Ethyl-2(und/oder 3)-phospholen-oxid. Phospholenoxide lassen sich nur aufwendig und unvollständig aus den Polycarbodiimiden entfernen (z.B. DE-A 2 504 400, DE-A 2 552 350, EP-A 609698). So ist eine Abtrennung dieser Katalysatoren mit einfachen, konventionellen Mitteln, beispielsweise durch Destillation, nur in geringem Maße möglich, wie Beispiel 3 im experimentellen Teil der vorliegenden Schrift belegt.

Der Verbleib solcher Phosphororganyle im Produkt jedoch kann sich negativ auf dessen Lagerstabilität auswirken. Um die Carbodiimidisierungsreaktion bei einem gewünschten NCO-Gehalt zu stoppen, muss der Phospholenoxidkatalysator deaktiviert werden, was durch eine Alkylierung, Silylierung oder Protonierung der P=O Gruppe erreicht werden kann. Eine solche Abstoppung ist jedoch häufig nicht ausreichend wirksam, so dass es zur Nachreaktion im Produkt während der Lagerung kommen kann. Dabei wird Kohlendioxid freigesetzt. Dies führt insbesondere bei längerer Lagerung und Temperaturanstieg zu einem Druckaufbau beispielsweise in den Lagerbehältern. Dem kann beispielsweise durch Erhöhung der Stoppermenge entgegengewirkt werden. Jedoch führt die Verwendung der im Stand der Technik bekannten Stopper (z.B. EP-A-515 933, EP-A-609 698, US-A-6,120,699) in dazu erforderlichen Mengen oftmals zur Verfärbung des Produkts.

Eine Aufgabe der vorliegenden Erfindung bestand daher darin, ein einfaches Verfahren zur Herstellung von Polycarbodiimiden, die möglichst geringe Restmengen an Carbodiimidisierungskatalysator aufweisen und damit die genannten Nachteile des Standes der Technik nicht aufweisen, zur Verfügung zu stellen.

Die vorstehend genannte Aufgabe wurde durch den Gegenstand der vorliegenden Erfindung gelöst.

Gegenstand der vorliegenden Erfindung ist ein Verfahren zur Herstellung von Carbodiimidgruppen enthaltenden Polyisocyanaten, bei dem in einem ersten Schritt wenigstens ein monomeres Di- und/oder Polyisocyanat in Gegenwart mindestens eines Phosphetan-1-oxids der allgemeinen Formel I

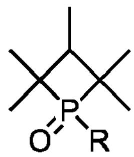

Formel I,

worin R für einen monovalenten organischen Rest mit 1 bis 6 Kohlenstoffatomen steht, der gesättigt oder ungesättigt oder aromatisch und verzweigt oder unverzweigt sein kann und Heteroatome wie Stickstoff oder Sauerstoff aufweisen kann, und bevorzugt für einen monovalenten organischen, gesättigten, aromatischen, verzweigten oder unverzweigten Rest mit 1 bis 6 Kohlenstoffatomen steht,

einer Carbodiimidisierungsreaktion unterzogen wird und in einem zweiten Schritt das/die Phosphetan-1-oxid/e, bevorzugt destillativ, aus dem Reaktionsprodukt des ersten Schrittes entfernt wird/werden.

Besonders bevorzugt wird/werden 1,2,2,3,4,4-Hexamethylphosphetan-1-oxid und/oder 1-Ethyl-2,2,3,4,4-Pentamethyl-phosphetan-1-oxid und/oder 1-Phenyl-2,2,3,4,4-Pentamethyl-phosphetan-1-oxid als Phosphetan-1-oxid/e eingesetzt. Am meisten bevorzugt wird 1,2,2,3,4,4-Hexamethylphosphetan-1-oxid eingesetzt.

Die im erfindungsgemäßen Verfahren einzusetzenden Phosphethan-1-Oxide können mittels Destillation auf einfache Weise aus dem Reaktionsprodukt abgetrennt und zurückgewonnen werden. Diese Möglichkeit der Rückgewinnung des Katalysators macht das Verfahren äußerst wirtschaftlich. Darüber hinaus sind die einzusetzenden Katalysatoren deutlich günstiger in der Herstellung als die im Stand der Technik verwendeten Phospholenoxide (Im experimentellen Teil der vorliegenden Schrift ist beispielhaft eine kostengünstige Herstellmethode für 1,2,2,3,4,4-Hexamethylphosphetan-1-oxid und/oder 1-Ethyl-2,2,3,4,4-Pentamethyl-phosphetan-1-oxid beschrieben.)

Auf die Möglichkeit der Verwendung von Phosphetanoxiden als Carbodiimidisierungskatalysatoren wird ganz generell bereits in der DE 23 42 148 A (Seite 2, 3. Abschnitt) verwiesen: "Weiter ist bekannt, das auch Phosphetanoxide als Carbodiimidisierungskatalysatoren verwendet werden können." Weitere Ausführungen macht die Schrift jedoch nicht dazu. Es wird weder auf ausgewählte Phosphetanoxide verwiesen, wie beispielsweise das im erfindungsgemäßen Verfahren besonders bevorzugt zu verwendende 1,2,2,3,4,4-Hexamethylphosphetan-1-oxid oder 1-Ethyl-2,2,3,4,4-Pentamethyl-phosphetan-l-oxid, noch gibt es einen Hinweis darauf, dass sich Phosphetanoxide destillativ weitestgehend aus dem erhaltenen Reaktionsgemisch entfernen lassen.

Im Sinne der vorliegenden Erfindung ist "Entfernung des/der Phosphetan-1-oxid/e" oder "Abtrennung des/der Phosphetan-1-oxid/e" so zu verstehen, dass die gemäß dem erfindungsgemäßen Verfahren erhältlichen Polycarbodiimide einen gemäß Elementaranalyse (ICP-OES, DIN ISO 17025) bestimmten Gehalt an Phosphor von vorzugsweise $\leq$ 450 ppm, mehr bevorzugt $\leq$ 300 ppm, noch mehr bevorzugt $\leq$ 220 ppm aufweisen. Unter Verwendung von 1,2,2,3,4,4-Hexamethylphosphetan-1-oxid als Katalysator beträgt der gemäß Elementaranalyse bestimmte Gehalt an Phosphor ganz besonders bevorzugt $\leq$ 100 ppm, darüber hinaus bevorzugt $\leq$ 25 ppm und am meisten bevorzugt $\leq$ 20 ppm.

Gegenstand der vorliegenden Erfindung sind auch Carbodiimidgruppen enthaltende Polyisocyanate mit einen gemäß Elementaranalyse (ICP-OES, DIN ISO 17025) bestimmten Gehalt an Phosphor von vorzugsweise $\leq$ 450 ppm, mehr bevorzugt $\leq$ 300 ppm, noch mehr bevorzugt $\leq$ 220 ppm, erhältlich nach dem erfindungsgemäßen Verfahren.

Erster Verfahrensschritt

Zur Durchführung des erfindungsgemäßen Verfahrens können prinzipiell alle bekannten aliphatischen, cycloaliphatischen, araliphatischen und aromatischen Di- oder Polyisocyanate des Standes der Technik einzeln oder in beliebigen Mischungen untereinander eingesetzt werden.

Beispielhaft seien genannt: Methylendiisocyanat, Dimethylendiisocyanat, Trimethylendiisocyanat, Tetramethylendiisocyanat, Pentamethylendiisocyanat, Hexamethylendiisocyanat (HDI), Dipropyletherdiisocyanat, 2-Methylpentan-1,5-diisocyanat, 2,2-Dimethylpentandiisocyanat, 3-Methoxyhexandiisocyanat, Octamethylendiisocyanat, 2,2,4-Trimethylpentandiisocyanat, 2,4,4-Trimethyl-1,6-hexandiisocyanat, 2,2,4-Trimethyl-1,6-hexandiisocyanat, Nonamethylendiisocyanat, Decamethylendiisocyanat, 3-Butoxyhexandiisocyanat, 1,4-Butylenglykoldipropyletherdiisocyanat, Thiodihexyldiisocyanat, Metaxylylendiisocyanat, Paraxylylendiisocyanat, Tetramethylxylylendiisocyanat, 4,4'-Dicyclohexylmethandiisocyanat (H12MDI), Isophorondiisocyanat (IPDI), , hydriertes Xylylendiisocyanat ($H_6XDI$), 1,12-Diisocyanatdodecan (DDI), Norbornandiisocyanat (NBDI), 2,4-Bis(8-isocyanatoctyl)-1,3-dioctylcyclobutan (OCDI), Naphthylen-1,5-diisocyanat, 1,3- sowie 1,4-Bis(isocyanatomethyl)benzen (XDI), 2,4- sowie 2,6-Toluylendiisocyanat (TDI), Bis(4-isocyanatophenyl)methan (4,4' MDI), 4-Isocyanatophenyl-2-isocyanatophenylmethan (2,4'MDI) sowie mehrkernige Produkte, die durch Formaldehyd-Anilin-Polykondensation und anschließende Überführung der resultierenden (Poly)amine in die entsprechenden (Poly)isocyanate zugänglich sind (Polymer-MDI).

Bevorzugt sind aliphatische und cycloaliphatische Diisocyanate. Besonders bevorzugt sind Isophorondiisocyanat (IPDI), Hexamethylendiisocyanat (HDI), hydriertes Xylylendiisocyanat ($H_6XDI$), 4,4'-Dicyclohexylmethandiisocyanat (H12MDI). Ganz besonders bevorzugt ist das cycloaliphatische Polyisocyanat 4,4'-Dicyclohexylmethandiisocyanat (H12MDI).

Es ist belanglos, nach welchen Verfahren die vorstehend genannten Isocyanate generiert werden, d.h. mit oder ohne Verwendung von Phosgen.

Die Umsetzung von aromatischen Di-/Polyisocyanaten zu Polycarbodiimid erfolgt in Gegenwart von bis zu 20 Gewichts-ppm Carbodiimidisierungskatalysator. Die Umsetzung von aliphatischen, cycloaliphatischen und/oder araliphatischen Di-/Polyisocyanaten zu Polycarbodiimid erfolgt in Gegenwart von 0.1-3.0 Gewichts-% , bevorzugt 0.1-2.0 Gewichts-% Carbodiimidisierungskatalysator. Die ppm- und %-Angaben beziehen sich jeweils auf die eingesetzte Menge an Di-/Polyisocyanat.

Als Carbodiimidisierungsatalysatoren werden die bereits oben näher beschriebenen Phosphetan-1-oxid/e eingesetzt.

Die Phosphetan-1-oxide können in Abmischung mit anderen Carbodiimidisierungskatalysatoren eingesetzt werden, wobei die obigen Mengenangaben einzuhalten sind. So können beispielsweise Phosphanoxide, Phospholanoxide und Phospholenoxide, sowie deren Sulfo- und Iminoanaloga mitverwendet werden. Ihr Gehalt bezogen auf die Menge an Phosphetan-1-oxiden sollte jedoch 80 Gewichts-%, bevorzugt 50 Gewichts-%, besonders bevorzugt 20 Gewichts-% nicht überschreiten.

Am meisten bevorzugt werden die Phosphetan-1-oxide jedoch nicht in Abmischung mit diesen Katalysatoren verwendet. D.h. am meisten bevorzugt werden ausschließlich Phosphetan-1-oxide als Carbodiimidisierungskatalysatoren in das Verfahren eingesetzt.

Die Umsetzung von Di-/Polyisocyanat zu Polycarbodiimid erfolgt bei einer Temperatur im Bereich von 130 bis

230°C, bevorzugt im Bereich von 140 bis 210°C, besonders bevorzugt im Bereich 150 bis 200 °C.

Die Umsetzung von Di-/Polyisocyanat zu Polycarbodiimid kann in Gegenwart oder Abwesenheit von Lösemitteln durchgeführt werden. Bevorzugt wird sie in Gegenwart mindestens eines Lösemittels durchgeführt. Dabei werden bevorzugt Lösemittel eingesetzt, welche einen Siedepunkt unter Normaldruck (1013mbar) von ≥ 120°C aufweisen. Dazu gehören beispielsweise Monochlorbenzol (MCB), Orthodichlorbenzol (OCB), Chlortoluole (beliebiges Isomer/Gemisch), Trichlorbenzol, hochsiende Ether wie z. B. Dibutylether, Diphenylether, Ditolylether.

Zweiter Verfahrensschritt

Im zweiten Verfahrensschritt wird der Katalysator aus dem aus Schritt 1 erhaltenen Reaktionsgemisch, bevorzugt destillativ, entfernt.

Sofern Verfahrensschritt 1 in Gegenwart eines Lösemittels durchgeführt wird, können Lösemittel und Katalysator gemeinsam in einem Destillationsschritt oder aber getrennt in mehreren Destillationsschritten aus dem aus Verfahrensschritt 1 erhaltenen Reaktionsgemisch abgetrennt werden. Bevorzugt werden Lösemittel und Katalysator gleichzeitig abgetrennt.

Bevorzugt erfolgt die Destillation bei reduziertem Druck, d.h. bei einem Vakuum von ≤ 250 mbar, besonders bevorzugt von ≤ 100 mbar, ganz besonders bevorzugt von ≤ 50 mbar, am meisten bevorzugt von ≤ 20 mbar.

Bevorzugt erfolgt die Destillation bei Temperaturen bis 250 °C, besonders bevorzugt bei Temperaturen bis 200 °C.

Dem Fachmann ist die Abhängigkeit des Siedepunktes eines Stoffes vom Umgebungsdruck gut bekannt. Die in Abhängigkeit vom Druck bei der Destillation einzustellende Destillationstemperatur bestimmt der Fachmann daher auf Basis seines Fachwissens.

Als Destillationsmethoden sind alle technisch üblichen Destillationsverfahren vorstellbar, wie z.B. (kontinuierlich oder diskontinuierlich betriebene) Blasendestillationen und oder Dünnschichtdestillationen optional in der besonderen Ausführungsform der Kurzwegdestillation.

## Experimenteller Teil

Alle Reaktionen wurden, wenn nicht anders angegeben, unter einer Stickstoffatmosphäre durchgeführt. Die verwendeten Diisocyanate sind Produkte der Covestro Deutschland AG, D-51368 Leverkusen, alle anderen kommerziell zugänglichen Chemikalien wurden von der Fa. Aldrich, D-82018 Taufkirchen, bezogen, soweit nicht anders angegeben.

Die Phosphetanoxid Katalysatoren 1,2,2,3,4,4-Hexamethylphosphetan-1-oxid und 1-Ethyl-2,2,3,4,4-Pentamethyl-phosphetan-1-oxid wurden nach Literatur [T. V. Nykaza, T. S. Harrison, A. Ghosh, R. A. Putnik and A. T. Radosevich, J Am Chem Soc 2017, 139, 6839-6842] hergestellt. Der Referenz-Katalysator Phospholenoxid (vorliegend als Isomerengemisch 1-Methyl-2 (und/oder 3)-phospholen-1-oxid) wurde von der Firma Clariant bezogen.

Der Phosphor-Gehalt wurde elementaranalytisch (ICP-OES, DIN - ISO 17025) bestimmt. NCO-Werte wurden volumetrisch gemäß DIN-EN ISO 1 1909 bestimmt.

## Beispiele

### Beispiel 1: Vergleichsbeispiel

Katalysator: Phospholenoxid

Zu $H_{12}$MDI (20.0 g, 75.8 mmol, 1.0 eq) in Chlorbenzol (2.22 g) wurde Phospholenoxid mit einem Stoffmengenanteil von xKat = 1.5% zugegeben. Das Reaktionsgemisch wurde auf 150 °C erhitzt und es wurden in regelmäßigen Abständen Proben von ~ 500 mg entnommen um den $NCO_t$-Wert zu ermitteln. Aus den ermittelten NCO-Werten wurde der Umsatz der freien Isocyanatgruppen zu Carbodiimidgruppen berechnet nach

$$\mathrm{Umsatz}_t = (\mathrm{NCO}_{t=0} - \mathrm{NCO}_t)/\mathrm{NCO}_{t=0}$$

wobei $NCO_t$ der gemessene NCO-Wert zum Zeitpunkt *t* und $NCO_{t=0}$ der NCO-Wert zum Zeitpunkt *t*=0 ist. Weiterhin wurde die TOF (turnover frequency) zum Zeitpunkt *t* berechnet nach

$$\mathrm{TOF}_t = (n(\mathrm{NCO})_t - n(\mathrm{NCO})_{t=0}/(n(\mathrm{Kat}) * t)$$

wobei $n(NCO)_t$ die Stoffmenge der NCO-Gruppen zum Zeitpunkt $t$ und $n(NCO)_t$=0 die Stoffmenge der NCO-Gruppen zum Zeitpunkt $t$=0 ist. $n$(Kat) ist die Stoffmenge des Katalysators und $t$ die Reaktionszeit. Die Ergebnisse sind der unteren Tabelle zu entnehmen.

| Reaktionszeit / h | Umsatz / % | TOF / $s^{-1}$ |
|---|---|---|
| 00:00 | 0.0 | |
| 00:30 | 13.5 | 0.0097 |
| 01:00 | 22.6 | 0.008125 |
| 01:30 | 25.2 | 0.0060 |
| 03:05 | 42.5 | 0.0050 |
| 04:00 | 51.4 | 0.0046 |
| 05:00 | 57.0 | 0.0041 |
| 06:00 | 64.1 | 0.003830 |

**Beispiel 2: erfindungsgemäß**

Katalysator: Phosphetanoxid

Es wurde verfahren wie eingangs beschrieben, mit dem Unterschied, dass 1,2,2,3,4,4-Hexamethylphosphetan-1-oxid als Katalysator verwendet wurde. Die Ergebnisse sind der unteren Tabelle zu entnehmen.

| Reaktionszeit / h | Umsatz / % | TOF / s-1 |
|---|---|---|
| 00:00 | 0.0 | |
| 00:30 | 1.4 | 0.0009 |
| 01:00 | 4.1 | 0.0013 |
| 01:30 | 6.7 | 0.0015 |
| 03:45 | 16.6 | 0.0015 |
| 04:15 | 18.6 | 0.0014 |
| 06:00 | 25.9 | 0.0014 |

**Beispiele 3: Vergleichsbeispiel**

Zu $H_{12}$MDI (20.0 g, 75.8 mmol, 1.0 eq) in Chlorbenzol (2.22 g) wurde Phospholenoxid (0.20 g) zugegeben. Das Reaktionsgemisch wurde auf 200 °C für 8 h erhitzt. Anschließend wurde eine Destillationsbrücke aufgesetzt und bei 200 °C und 20 mbar destilliert. Der Rückstand wurde auf P-Gehalt per Elementaranalyse untersucht und es wurde ein Wert von 480 mg / kg gefunden, was 18% der ursprünglichen Katalysator-Menge entspricht.

**Beispiel 4: erfindungsgemäß**

Zu $H_{12}$MDI (20.0 g, 75.8 mmol, 1.0 eq) in Chlorbenzol (2.22 g) wurde 1-Ethyl-2,2,3,4,4-Pentamethyl-phosphetan-1-oxid (0.20 g) zugegeben. Das Reaktionsgemisch wurde auf 200 °C für 8 h erhitzt. Anschließend wurde eine Destillationsbrücke aufgesetzt und bei 200 °C und 20 mbar destilliert. Der Rückstand wurde auf P-Gehalt per Elementaranalyse untersucht und es wurde ein Wert von 200 mg / kg gefunden, was 11% der ursprünglichen Katalysator-Menge entspricht.

**Beispiel 5: erfindungsgemäß**

Zu $H_{12}$MDI (20.0 g, 75.8 mmol, 1.0 eq) in Chlorbenzol (2.22 g) wurde 1,2,2,3,4,4-Hexamethylphosphetan-1-oxid (0.20 g) zugegeben. Das Reaktionsgemisch wurde auf 200 °C für 8 h erhitzt. Anschließend wurde eine Destillationsbrücke aufgesetzt und bei 200 °C und 20 mbar destilliert. Der Rückstand wurde auf P-Gehalt per Elementaranalyse untersucht und es wurde ein Wert von 18 mg / kg gefunden, was 1% der ursprünglichen Katalysator-Menge entspricht.

## Patentansprüche

1. Verfahren zur Herstellung von Carbodiimidgruppen enthaltenden Polyisocyanaten, bei dem in einem ersten Schritt wenigstens ein monomeres Di- und/oder Polyisocyanat in Gegenwart mindestens eines Phosphetan-1-oxids der allgemeinen Formel I

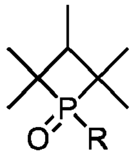

Formel I,

worin R für einen monovalenten organischen Rest mit 1 bis 6 Kohlenstoffatomen steht, der gesättigt oder ungesättigt oder aromatisch und verzweigt oder unverzweigt sein kann und Heteroatome wie Stickstoff oder Sauerstoff aufweisen kann, und bevorzugt für einen monovalenten organischen, gesättigten, aromatischen, verzweigten oder unverzweigten Rest mit 1 bis 6 Kohlenstoffatomen steht,
einer Carbodiimidisierungsreaktion unterzogen wird und in einem zweiten Schritt das/die Phosphetan-1-oxid/e, bevorzugt destillativ, aus dem Reaktionsprodukt des ersten Schrittes entfernt wird/werden.

2. Verfahren gemäß Anspruch 1, wobei 1,2,2,3,4,4-Hexamethylphosphetan-1-oxid und/oder 1-Ethyl-2,2,3,4,4-Pentamethyl-phosphetan-l-oxid und/oder 1-Phenyl-2,2,3,4,4-Pentamethyl-phosphetan-1-oxid als Phosphetan-1-oxid/e der Formel I eingesetzt wird/werden.

3. Verfahren gemäß Anspruch 1 oder 2, wobei das wenigstens eine monomere Di- und/oder Polyisocyanat ausgewählt ist aus aliphatischen, cycloaliphatischen, araliphatischen und aromatischen Di- oder Polyisocyanaten.

4. Verfahren gemäß Anspruch 3, wobei

   - aliphatische, cycloaliphatische und/oder araliphatische monomere Di- und/oder Polyisocyanate in das Verfahren eingesetzt werden und die Carbodiimidisierungsreaktion in Gegenwart von ≤ 20 Gewichts-ppm Carbodiimidisierungkatalysator erfolgt,
   - aromatische monomere Di- und/oder Polyisocyanate in das Verfahren eingesetzt werden und die Carbodiimidisierungsreaktion in Gegenwart von 0.1 bis 3.0 Gewichts-% , bevorzugt 0.1 bis 2.0 Gewichts-% Carbodiimidisierungskatalysator erfolgt,

   und wobei unter dem Begriff Carbodiimidisierungskatalysator das/die Phosphetan-1-oxid/e der allgemeinen Formel I, gegebenenfalls in Abmischung mit ≤ 80 Gewichts-%, bezogen auf die Menge an Phosphetan-1-oxiden, an weiteren, von Phosphetan-1-oxiden der Formel I verschiedenen, die Carbodiimidisierungsreaktion katalysierenden Verbindungen, zu verstehen ist/sind.

5. Verfahren gemäß Anspruch 4, wobei unter dem Begriff Carbodiimidisierungskatalysator ausschließlich das/die Phosphetan-1-oxid/e der allgemeinen Formel I zu verstehen ist/sind.

6. Verfahren gemäß einem der Ansprüche 1 bis 5, wobei die Carbodiimidisierungsreaktion bei einer Temperatur im Bereich von 130 bis 230°C, bevorzugt im Bereich von 140 bis 210°C erfolgt.

7. Verfahren gemäß einem der Ansprüche 1 bis 6, wobei die Carbodiimidisierungsreaktion in Gegenwart wenigstens eines Lösemittels durchgeführt wird.

8. Verfahren gemäß Anspruch 7, wobei das/die Lösemittel einen Siedepunkt unter Normaldruck (1013mbar) von ≥ 120°C aufweist/aufweisen.

9. Verfahren gemäß Anspruch 7 oder 8, wobei das/die Lösemittel und das/die Phosphetan-1-oxid/e gemäß Formel I

gemeinsam in einem Destillationsschritt aus dem aus Verfahrensschritt 1 erhaltenen Reaktionsgemisch abgetrennt werden.

**10.** Verfahren gemäß einem der Ansprüche 1 bis 9, wobei die Destillation bei gegenüber Normaldruck (1013mbar) reduziertem Druck erfolgt.

**11.** Carbodiimidgruppen enthaltende Polyisocyanate mit einen gemäß Elementaranalyse (ICP-OES, DIN ISO 17025) bestimmten Gehalt an Phosphor von ≤ 450 ppm, bevorzugt ≤ 300 ppm, mehr bevorzugt ≤ 220 ppm, erhältlich nach einem Verfahren gemäß einem der Ansprüche 1 bis 10.

**12.** Carbodiimidgruppen enthaltende Polyisocyanate mit einen gemäß Elementaranalyse (ICP-OES, DIN ISO 17025) bestimmten Gehalt an Phosphor von ≤ 100 ppm, bevorzugt ≤ 25 ppm, besonders bevorzugt ≤ 20 ppm, erhältlich nach einem Verfahren gemäß einem der Ansprüche 1 bis 10, wobei 1,2,2,3,4,4-Hexamethylphosphetan-1-oxid als Phosphetan-1-oxid der Formel I eingesetzt wird.

Europäisches Patentamt
European Patent Office
Office européen des brevets

# EUROPÄISCHER RECHERCHENBERICHT

Nummer der Anmeldung
EP 20 15 7825

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y<br><br>A | GB 1 215 157 A (ICI LTD [GB])<br>9. Dezember 1970 (1970-12-09)<br>* Seite 3; Beispiel 7 *<br>* Seite 2, Zeile 34 - Zeile 43 *<br>----- | 1-10<br><br>11,12 | INV.<br>C08G18/02<br>C08G18/16<br>C08G18/75<br>C08G18/79 |
| Y,D<br><br>A | DE 23 42 148 A1 (BAYER AG)<br>6. März 1975 (1975-03-06)<br>* Seite 26 *<br>* Seite 25; Beispiel 5 *<br>----- | 1-10<br><br>11,12 | |
| X<br><br>Y | DE 10 2009 027246 A1 (EVONIK DEGUSSA GMBH [DE]) 30. Dezember 2010 (2010-12-30)<br>* Seite 5; Beispiele 1a, 1b *<br>* Seite 4, Absatz [0023] *<br>----- | 11<br><br>1-10 | |
| X | US 5 354 888 A (SCHOLL HANS-JOACHIM [DE])<br>11. Oktober 1994 (1994-10-11)<br>* Spalte 6; Beispiel 7 *<br>* erster Absatz;<br>Spalte 3 *<br>----- | 11,12 | RECHERCHIERTE SACHGEBIETE (IPC) |
| X | US 4 294 719 A (WAGNER KUNO ET AL)<br>13. Oktober 1981 (1981-10-13)<br>* Spalte 28; Beispiel 14 *<br>----- | 11,12 | C08G |

Der vorliegende Recherchenbericht wurde für alle Patentansprüche erstellt

1

| Recherchenort | Abschlußdatum der Recherche | Prüfer |
|---|---|---|
| München | 28. Juli 2020 | Wohnhaas, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 20 15 7825

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-07-2020

| Im Recherchenbericht angeführtes Patentdokument | Datum der Veröffentlichung | Mitglied(er) der Patentfamilie | Datum der Veröffentlichung |
|---|---|---|---|
| GB 1215157 A | 09-12-1970 | KEINE | |
| DE 2342148 A1 | 06-03-1975 | BE 818976 A | 19-02-1975 |
| | | DE 2342148 A1 | 06-03-1975 |
| | | FR 2241561 A1 | 21-03-1975 |
| | | GB 1483607 A | 24-08-1977 |
| | | JP S5050498 A | 06-05-1975 |
| | | NL 7411062 A | 25-02-1975 |
| | | US 3931059 A | 06-01-1976 |
| DE 102009027246 A1 | 30-12-2010 | AU 2010265038 A1 | 15-12-2011 |
| | | CN 102803326 A | 28-11-2012 |
| | | DE 102009027246 A1 | 30-12-2010 |
| | | EP 2445945 A1 | 02-05-2012 |
| | | JP 2012530743 A | 06-12-2012 |
| | | US 2012065424 A1 | 15-03-2012 |
| | | WO 2010149406 A1 | 29-12-2010 |
| US 5354888 A | 11-10-1994 | CA 2114347 A1 | 02-08-1994 |
| | | DE 4302697 A1 | 04-08-1994 |
| | | EP 0609698 A1 | 10-08-1994 |
| | | ES 2104195 T3 | 01-10-1997 |
| | | JP 3540000 B2 | 07-07-2004 |
| | | JP H06256288 A | 13-09-1994 |
| | | US 5354888 A | 11-10-1994 |
| US 4294719 A | 13-10-1981 | AT 347686 B | 10-01-1979 |
| | | AU 1074276 A | 11-08-1977 |
| | | BE 838089 A | 30-07-1976 |
| | | BR 7600620 A | 31-08-1976 |
| | | CA 1067091 A | 27-11-1979 |
| | | DD 129021 A5 | 21-12-1977 |
| | | DE 2504400 A1 | 05-08-1976 |
| | | ES 444780 A1 | 16-05-1977 |
| | | FR 2299353 A1 | 27-08-1976 |
| | | GB 1523962 A | 06-09-1978 |
| | | JP S51101918 A | 08-09-1976 |
| | | NL 7600918 A | 03-08-1976 |
| | | US 4294719 A | 13-10-1981 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2840589 A
- US 2853473 A
- US 2941966 A
- EP 628541 A
- DE 2504400 A
- DE 2552350 A
- EP 609698 A
- EP 515933 A
- US 6120699 A
- DE 2342148 A


### In der Beschreibung aufgeführte Nicht-Patentliteratur


- **T. V. NYKAZA ; T. S. HARRISON ; A. GHOSH ; R. A. PUTNIK ; A. T. RADOSEVICH.** *J Am Chem Soc,* 2017, vol. 139, 6839-6842